(19) Europäisches Patentamt / European Patent Office / Office européen des brevets

(11) **EP 0 997 012 B1**

(12) **EUROPÄISCHE PATENTSCHRIFT**

(45) Veröffentlichungstag und Bekanntmachung des Hinweises auf die Patenterteilung:
**07.03.2007 Patentblatt 2007/10**

(21) Anmeldenummer: **97909203.8**

(22) Anmeldetag: **01.10.1997**

(51) Int Cl.:
*H04B 7/26* *(2006.01)*

(86) Internationale Anmeldenummer:
**PCT/DE1997/002267**

(87) Internationale Veröffentlichungsnummer:
**WO 1999/004512 (28.01.1999 Gazette 1999/04)**

(54) **DRAHTLOSES TELEKOMMUNIKATIONSSYSTEM MIT EINER CDMA-, FDMA- UND TDMA-VIELFACHZUGRIFFSKOMPONENTE, INSBESONDERE EIN BEZÜGLICH VIELFACHZUGRIFFSMETHODEN HYBRIDES "JD-CDMA"-TELEKOMMUNIKATIONSSYSTEM**

WIRELESS TELECOMMUNICATIONS SYSTEM WITH A CDMA, FDMA AND TDMA MULTIPLE ACCESS COMPONENT, ESPECIALLY A "JD-CDMA" TELECOMMUNICATIONS SYSTEM WITH HYBRID MULTIPLE ACCESS TECHNIQUES

SYSTEME DE TELECOMMUNICATIONS SANS FIL A COMPOSANT D'ACCES MULTIPLE AMCR, AMRF ET AMRT, NOTAMMENT SYSTEME DE TELECOMMUNICATIONS "JD-AMCR" HYBRIDE EN TERMES DE PROCEDES D'ACCES MULTIPLE

(84) Benannte Vertragsstaaten:
**DE ES FR GB IT**

(30) Priorität: **15.07.1997 DE 19730316**

(43) Veröffentlichungstag der Anmeldung:
**03.05.2000 Patentblatt 2000/18**

(73) Patentinhaber: **SIEMENS AKTIENGESELLSCHAFT**
**80333 München (DE)**

(72) Erfinder:
- **BAHRENBURG, Stefan**
  **D-81477 München (DE)**
- **EUSCHER, Christoph**
  **D-46414 Rhede (DE)**
- **BAIER, Paul, Walter**
  **D-67661 Kaiserslautern (DE)**
- **MAYER, Jürgen**
  **D-67105 Schifferstadt (DE)**
- **SCHLEE, Johannes**
  **D-67657 Kaiserslautern (DE)**
- **WEBER, Tobias**
  **D-67731 Otterbach (DE)**

(56) Entgegenhaltungen:
**EP-A- 0 651 523          EP-A- 0 662 775**

- **KLEIN A ET AL: "KNOWN AND NOVEL DIVERSITY APPROACHES AS A POWERFUL MEANS TO ENHANCE THE PERFORMANCE OF CELLULAR MOBILE RADIO SYSTEMS" IEEE JOURNAL ON SELECTED AREAS IN COMMUNICATIONS, Bd. 14, Nr. 9, Dezember 1996, Seiten 1784-1795, XP000639641**
- **BAIER ET AL: "Recent results concerning the benefit of joint detection in CDMA systems" IEE COLLOQUIM ON 'SPREAD SPECTRUM TECHNIQUES FOR RADIO COMMUNICATION SYSTEMS', April 1993, LONDON, UK, Seiten 5/1-4, XP002058061**

**Beschreibung**

In Nachrichtensystemen mit einer Nachrichtenübertragungsstrecke zwischen einer Nachrichtenquelle und einer Nachrichtensenke werden zur Nachrichtenverarbeitung und -übertragung Sende- und Empfangsgeräte verwendet, bei denen

1) die Nachrichtenverarbeitung und Nachrichtenübertragung in einer bevorzugten Übertragungsrichtung (Simplex-Betrieb) oder in beiden Übertragungsrichtungen (Duplex-Betrieb) erfolgen kann,

2) die Nachrichtenverarbeitung analog oder digital ist,

3) die Nachrichtenübertragung über die Fernübertragungsstrekke drahtgebunden ist oder auf der Basis von diversen Nachrichtenübertragungsverfahren FDMA (**F**requency **D**ivision **M**ultiple Access), TDMA (Time Division Multiple Access) und/oder CDMA (**C**ode **D**ivision **M**ultiple **A**ccess) - z.B. nach Funkstandards wie DECT, GSM, WACS oder PACS, IS-54, IS-95, PHS, PDC etc. [vgl. IEEE Communications Magazine, January 1995, Seiten 50 bis 57; D.D. Falconer et al:"Time Division Multiple Access Methods for Wireless Personal Communications"] drahtlos (z.B. durch Funkübertragung) erfolgt.

"Nachricht" ist ein übergeordneter Begriff, der sowohl für den Sinngehalt (Information) als auch für die physikalische Repräsentation (Signal) steht. Trotz des gleichen Sinngehaltes einer Nachricht - also gleicher Information - können unterschiedliche Signalformen auftreten. So kann z. B. eine einen Gegenstand betreffende Nachricht

(1) in Form eines Bildes,

(2) als gesprochenes Wort,

(3) als geschriebenes Wort,

(4) als verschlüsseltes Wort oder Bild

übertragen werden. Die Übertragungsart gemäß (1) ... (3) ist dabei normalerweise durch kontinuierliche (analoge) Signale charakterisiert, während bei der Übertragungsart gemäß (4) gewöhnlich diskontinuierliche Signale (z. B. Impulse, digitale Signale) entstehen.

Ausgehend von dieser allgemeinen Definition eines Nachrichtensystems bezieht sich die Erfindung auf ein Drahtloses Telekommunikationssystem mit einer CDMA-,FDMA- und TDMA-Vielfachzugriffskomponente, insbesondere ein bezüglich Vielfachzugriffsmethoden hybrides "JD-CDMA"-Telekommunikationssystem.

Drahtlose Telekommunikationssysteme mit CDMA-,FDMA- und TDMA-Vielfachzugriffskomponenten, insbesondere bezüglich Vielfachzugriffsmethoden hybride "JD-CDMA"-Telekommunikationssysteme werden gemäß der Druckschriften **(1)**: *Nachrichtentechnik Elektronik, Berlin 45, 1995, Heft 1, Seiten 10 bis 14 und Heft 2, Seiten 24 bis 27; P. Jung, B. Steiner: "Konzept eines CDMA-Mobilfunksystems mit gemeinsamer Detektion für die dritte Mobilfunkgeneration";* **(2)**: *Nachrichtentechnik Elektronik, Berlin 41, 1991, Heft 6, Seiten 223 bis 227 und Seite 234; P. W. Baier, P. Jung, A.Klein: "CDMA - ein günstiges Vielfachzugriffsverfahren für frequenzselektive und zeitvariante Mobilfunkkanäle";* **(3)**: *IEICE Transactions on Fundamentals of Electonics, Communications and Computer Sciences, Vol. E79-A, No. 12, December 1996, Seiten 1930 bis 1937; P.W.Baier, P. Jung: "CDMA Myths and Realities Revisited";* **(4)**: *IEEE Personal Communications, February 1995, Seiten 38 bis 47; A. Urie, M.Streeton, C.Mourot: "An Advanced TDMA Mobile Access System for UMTS";* **(5)**: *telekom praxis, 5/1995, Seiten 9 bis 14; P. W. Baier: "Spread-Spectrum-Technik und CDMA - eine ursprünglich militärische Technik erobert den zivilen Bereich";* **(6)** : *IEEE Personal Communications, February 1995, Seiten 48 bis 53; P.G.Andermo, L.M.Ewerbring: "An CDMA-Based Radio Access Design for UMTS";* **(7)**: *ITG Fachberichte 124 (1993), Berlin, Offenbach: VDE Verlag ISBN 3-8007-1965-7, Seiten 67 bis 75; Dr. T.Zimmermann, Siemens AG: "Anwendung von CDMA in der Mobilkommunikation";* mit Ausblick auf ein **U**niverselles **M**obiles **T**elekommunikations-**S**ystem (UMTS) als das zukünftige Funk-Telekommunikationsszenarie der dritten Generation bezeichnet.

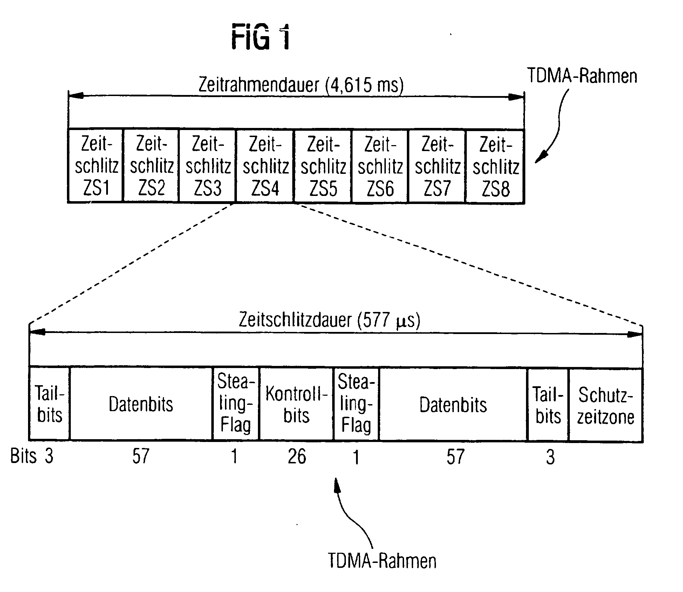

Das Funk-Telekommunikationsszenario der zweiten Generation werden zur Zeit im Mikro- bzw. Makrozellenbereich vom GSMspezifischen Funk-Telekommunikationssystem (**G**roupe **S**péciale **M**obile oder **G**lobal **S**ystem for **M**obile Communication; vgl. **(1)**: Informatik Spektrum 14 (1991) Juni, Nr. 3, Berlin, DE; A.Mann:"Der GSM-Standard - Grundlage für digitale europäische Mobilfunknetze", Seiten 137 bis 152; **(2)**: R.Steele: Mobile Radio Communications, Pentech Press, 1992 (Reprint 1994), Chapter 8: The Pan-European Digital Cellular Mobile Radio System - known as GSM, Seiten 677 ff.) und im Pikozellenbereich vom DECT-Telekommunikationssystem [**D**igital **E**nhanced (früher: **Eu**ropean) **C**ordless **T**elecommunication; vgl. **(1)**: Nachrichtentechnik Elektronik 42 (1992) Jan./Feb. Nr. 1, Berlin, DE; U. Pilger "Struktur des DECT-Standards", Seiten 23 bis 29 in Verbindung mit der ETSI-Publikation ETS 300175-1...9, Oktober 1992; **(2):** Telcom Report 16 (1993), Nr. 1, J. H. Koch: "Digitaler Komfort für schnurlose Telekommunikation - DECT-Standard eröffnet neue Nutzungsgebiete", Seiten 26 und 27; **(3):** tec 2/93 - Das technische Magazin von Ascom "Wege zur universellen mobilen Telekommunikation", Seiten 35 bis 42; **(4):** Philips Telecommunication Review Vol. 49, No. 3, Sept. 1991, R.J. Mulder:" DECT, a universal cordless access system"; **(5):** WO 93/21719 (FIG 1 bis 3 mit dazugehöriger Beschreibung)] bestimmt.

FIGUR 1 zeigt die aus den Druckschriften *(1): Informatik Spektrum 14 (1991) Juni, Nr. 3, Berlin, DE; A.Mann:"Der GSM-Standard - Grundlage für digitale europäische Mobilfunknetze", Seiten 137 bis 152; (2): R.Steele: Mobile Radio Communications, Pentech Press, 1992 (Reprint 1994), Chapter 8: The Pan-European Digital Cellular Mobile Radio System - known as GSM, Seiten 677 ff.* bekannte TDMA-Rahmen- und TDMA-Zeitschlitz-Struktur des GSM-Mobilfunkkonzeptes.

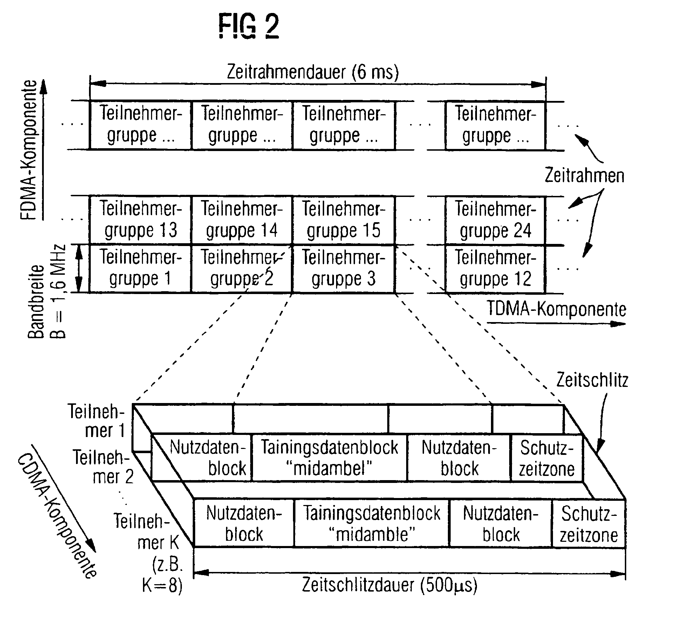

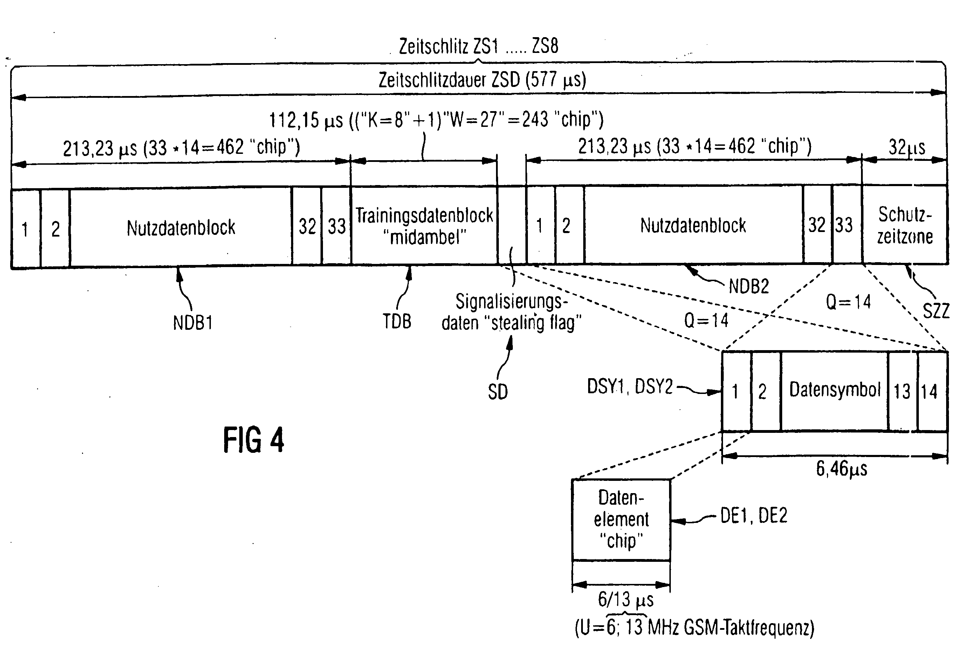

FIGUR 2 zeigt einen aus den Druckschriften **(1)**: *Nachrichtentechnik Elektronik, Berlin 45, 1995, Heft 1, Seiten 10 bis 14 und Heft 2, Seiten 24 bis 27; P.Jung, B.Steiner: "Konzept eines CDMA-Mobilfunksystems mit gemeinsamer Detektion für die dritte Mobilfunkgeneration",* **(2)**: *IEEE Journal on Selected Areas in Communications, Vol. 14, No. 9, Dez. 1996; A. Klein, D. Steiner, A. Steil: "Known and novel diversity approaches as a powerful means to enhanced the performance of cellular mobile radio systems"* bekannten, insbesondere in Bild 4 der Druckschrift **(1)** und in FIGUR 4 der Druckschrift **(2)** dargestellten Vielfachzugriff in der Aufwärtsstrecke (up link; Übertragungsrichtung "Mobilteil --> Basisstation") - stellvertretend für die Vielzahl von drahtlosen Telekommunikationssystemen mit CDMA-, FDMA- und TDMA-Vielfachzugriffskomponenten - eines Joint Detection-CDMA-Mobilfunkkonzeptes.

Die Anzahl der in einem Zeitschlitz gleichzeitig aktiven Teilnehmer ist z.B. K=8.

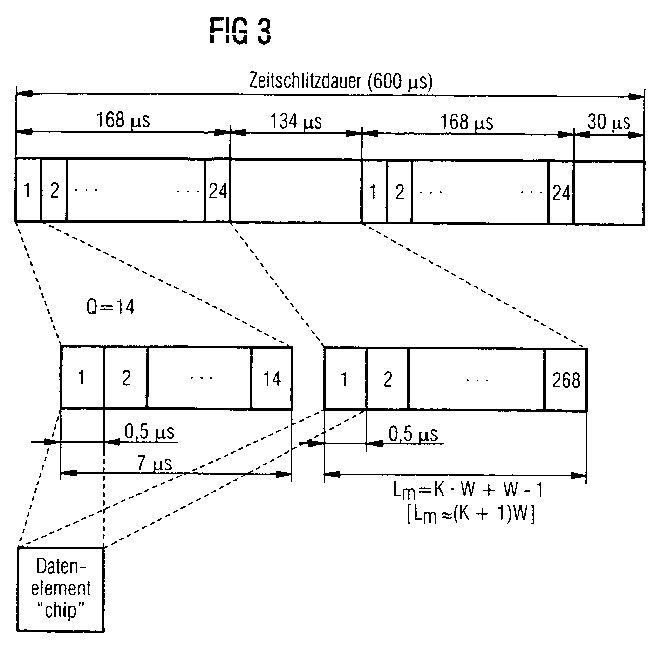

FIGUR 3 zeigt ausgehend von der Darstellung des Vielfachzugriffs in FIGUR 2 die aus der Druckschrift *Nachrichtentechnik Elektronik, Berlin 45, 1995, Heft 1, Seiten 10 bis 14 und Heft 2, Seiten 24 bis 27; P.Jung, B.Steiner: "Konzept eines CDMA-Mobilfunksystems mit gemeinsamer Detektion für die dritte Mobilfunkgeneration"* bekannte, insbesondere in Bild 5 der Druckschrift dargestellte Zeitschlitzstruktur (Burststruktur) der Aufwärtsstrecke (up link; Übertragungsrichtung "Mobilteil --> Basisstation") des Joint Detection-CDMA-Mobilfunkkonzeptes.

Die in FIGUR 3 angegebenen 24 Datensymbole der Nutzdatenblöcke werden mit einem teilnehmerspezifischen Spreizcode mit einem Spreizfaktor von Q=14 gespreizt, so daß jedes Datensymbol 14 als "chip" ausgebildete Datenelemente enthält.

Aus der EP 0 651 523 A2 ist ein digitales zellulares Kommunikationssystem bekannt, bei dem eine Basisstation einen Zeitrahmen mit einer vorgegebenen Anzahl von Burst-Signalen, die jeweils zur Kennzeichnung, dass es sich bei dem Rahmen um einen TCH-Kanal oder um einen FACCH-Kanal handelt, ein als "stealing flag" ausgebildetes Kennzeichnungsbit aufweisen. In einer Mobilstation, wo die verzögerungsgestreuten Burst-Signale empfangen und entzerrt werden, wird aus dem entzerrten Signal eine Information gewonnen, bei der das als "stealing flag" ausgebildete Kennzeichnungsbit durch einen Multibitwert repräsentiert wird.

Die der Erfindung zugrundeliegende Aufgabe besteht darin, ein drahtloses Telekommunikationssystem mit einer CDMA-,FDMA- und TDMA-Vielfachzugriffskomponente, insbesondere ein bezüglich Vielfachzugriffsmethoden hybrides "JD-CDMA"-Telekommunikationssystem an ein GSM-spezifisches/DECT-spezifisches (mikro-, makro-, und/ oder pikozellenspezifisches) Telekommunikationssystem bezüglich der Luftschnittstelle kompatibel zu adaptieren.

Dadurch ist es möglich, einerseits Systemkomponenten, die bis jetzt erfolgreich in GSM-Produkten/DECT-Produkten (mikro-, makro-, und/oder pikozellenspezifische Produkte) der zweiten Mobilfunk-/Schnurlostelekommunikationsgeneration zum Einsatz kommen, auch in zukünftigen drahtlosen Telekommunikationssystemen mit CDMA-,FDMA- und TDMA-Vielfachzugriffskomponenten der dritten Mobilfunk-/Schnurlostelekommunikationsgeneration ohne aufwendige Änderungen zu übernehmen und andererseits die Akzeptanz bei den Netzbetreibern der zweiten Mobilfunk-/Schnurlostelekommunikationsgeneration für ein derart konzipiertes Szenario der dritten Mobilfunk-/Schnurlostelekommunikationsgeneration zu steigern, indem die Netzbetreiber von ihren aus der zweiten Mobilfunk-/Schnurlostelekommunikationsgeneration gesammelten Erfahrungen profitieren können und diese Erfahrungen bei einem gleitenden Übergang zum universellen mobilen Telekommunikationssystem nutzen können.

Die der Erfindung zugrundeliegende Idee besteht zum einen - gemäß Patentanspruch 1 - darin, als "stealing flag" ausgebildete Signalisierungsinformationen zur Unterscheidung zwischen Nutz- und Signalisierungskanälen derart in die vorgesehene Zeitschlitzstruktur anzuordnen, daß eine asymmetrische Verteilung von Zeitschlitzdaten bezüglich eines Trainingsdatenblocks (midamble) der Zeitschlitzstruktur entsteht. Nach den Ansprüchen 11, 12 und 13 ist es dabei von besonderem Vorteil, wenn die Signalisierungsinformationen zum Schutz gegen Zeitvarianz unmittelbar vor und/ oder nach dem Trainingsdatenblock plaziert werden.

Mit der Weiterbildung der Erfindung gemäß Anspruch 2 wird das drahtlose Telekommunikationssystem mit einer CDMA-,FDMA- und TDMA-Vielfachzugriffskomponente (auch) bezüglich der Zeitschlitzdauer an das GSM-Telekommunikationssystem angepaßt.

Die Weiterbildung gemäß Anspruch 3 erweist sich im Hinblick auf die Weiterbildung gemäß Anspruch 2 als vorteilhaft, weil durch die Kombination der Ansprüche 2 und 3 ein "8 x 8 Schachbrettmuster" entsteht, bei dem die zu übertragenen Informationen (z.B. GSM-Informationen) - völlig gleichwertig - entweder in einen CDMA-Code oder in einem Zeitschlitz gepackt werden können. Darüber hinaus ist eine derartige Kombination vorteilhaft bei der Übertragung von ISDN-Informationen über die Luftschnittstelle des drahtlosen Telekommunikationsystems mit einer CDMA-, FDMA- und TDMA-Vielfachzugriffskomponente.

Weitere vorteilhafte Weiterbildungen der Erfindung sind in den übrigen Ansprüchen angegeben.

Ein Ausführungsbeispiel der Erfindung wird anhand der FIGUR 4 erläutert. Es zeigt:

FIGUR 4 die Zeitschlitzstruktur eines drahtlosen Telekommunikationssystem mit einer CDMA-,FDMA- und TDMA-Vielfachzugriffskomponente, insbesondere ein bezüglich Vielfachzugriffsmethoden hybrides "JD-CDMA"-Telekommunikationssystem.

FIGUR 4 zeigt ausgehend von den FIGUREN 2 und 3 die Zeitschlitzstruktur eines drahtlosen Telekommunikationssystem mit einer CDMA-,FDMA- und TDMA-Vielfachzugriffskomponente, insbesondere ein bezüglich Vielfachzugriffsmethoden hybrides "JD-CDMA"-Telekommunikationssystem, das bezüglich der Zeitschlitzdauer ZSD (ca. 577 $\mu$s) und der Übertragungszeitdauer eines in der Zeitschlitzstruktur enthaltenen, als "chip" ausgebildeten Datenelementes DE1, DE2 kompatibel an das GSM-Telekommunikationssystem mit einer Zeitschlitzdauer von ca. 577 $\mu$s und einer GSM-Taktfrequenz von 13 MHz (vgl. FIGUR 1) angepaßt ist.

Die in Figur 4 dargestellte Zeitschlitzstruktur zeigt einen Zeitschlitz ZS1...ZS8 mit der Zeitschlitzdauer ZSD von 577 $\mu$s. In einem drahtlosen Telekommunikationssystem mit einer TDMA-Vielfachzugriffskomponente sind beispielsweise gemäß der Darstellung in Figur 1 acht Zeitschlitze ZS1...ZS8 in einem TDMA-Rahmen untergebracht. Der in Figur 4 dargestellte Zeitschlitz ZS1...ZS8 weist zwei Nutzdatenblöcke, einen ersten Nutzdatenblock NDB1 und einen zweiten Nutzdatenblock NDB2, einen zwischen den beiden Nutzdatenblöcken NDB1, NDB2 angeordneten, als "Midamble" ausgebildeten Trainingsdatenblock TDB und eine nach dem Trainingsdatenblock TDB und dem zweiten Nutzdatenblock NDB2 angeordnete Schutzzeitzone SZZ auf. Im Zuge der kompatiblen Adaption der dargestelltem Zeitschlitzstruktur an die GSM-Verhältnisse wird die Zeitschlitzstruktur zum einen an die GSM-Taktfrequenz und zum anderen an die GSM-Zeitschlitzstruktur, bei der zwischen dem ersten Nutzdatenblock NDB1 und dem Trainingsdatenblock TDB sowie zwischen dem zweiten Nutzdatenblock NDB2 und dem Trainingsdatenblock TDB jeweils zu Signalisierungszwecken als "stealing flag" ausgebildete Signalisierungsdaten SD enthalten sind, angepasst.

Die kompatible Adaption kann noch weitergetrieben werden, wenn insgesamt die nachfolgenden, an die GSM-Verhältnisse angelehnten Parameter verwendet werden.

| | |
|---|---|
| GSM-Framedauer: 4,615 ms | $T_{fr}$ |
| GSM-Burstdauer: 577 $\mu$s | $T_b$ |
| GSM-Takt: 13 MHz | $.f_t$ |
| GSM-Signalisierungkanäle: Alle 13 Frames | $P_{sig}$ |

| | |
|---|---|
| GSM-Nutzbitrate: 13 kBit/s | D |
| Faltungscode mit Coderate: 0,5 | R |
| Constraintlength (Rückgrifftiefe): 5 | $L_c$ |
| Interleavingtiefe (Verschachtelungstiefe): 4 | $I_D$ |
| Bruttobits pro Symbol (z.B. 4 PSK-Modulation):2 | m |
| Teilnehmer pro Burst: 8 | K |
| Spreizfaktor: 14 | Q |
| Dauer der Impulsantwort pro Teilnehmer: >12 $\mu$s | $T_{imp}$ |
| Schutzzeitzonendauer: ca. 30 $\mu$s | $T_g$ |

Beim GSM-System berechnen sich die Bits pro Interleavingrahmen wie folgt:

$$B_i = D * I_D * T_b * P_{sig} / (R * (P_{sig} - 1)) = 260$$

Um in einem Telekommunikationssystem mit einer CDMA-,FDMA- und TDMA-Vielfachzugriffskomponente, insbesondere ein bezüglich Vielfachzugriffsmethoden hybrides "JD-CDMA"-Telekommunikationssystem die Anzahl der Symbole (und nicht Bits wie bei GSM) pro Burst zu berechnen, wird von diesen 260 Nutzbits pro Interleavingrahmen ausgegangen, die in dem GSM-System übertragen werden.

Werden die Tailbits des Faltungscoders berücksichtigt, so erhält man:

$$B_{it} = B_i + (L_c - 1) = 264$$

Die Anzahl der Bruttobits pro Interleavingrahmen ist:

$$B_{ibr} = B_{it}/R = 528$$

Legt man nun eine 4 PSK-Modulation mit zwei Bruttobits pro Symbol (m=2) und eine Interleavingtiefe (Verschachtelungstiefe) von $I_D = 4$ zugrunde, so beträgt die Anzahl der Symbole pro Burst einschließlich der als "stealing flag" ausgebildeten Signalisierungsdaten SD:

$$S_b = B_{ibr}/(m*I_D) + 1 = 67$$

Dies bedeutet, dass bei der in FIGUR 4 dargestellten Zeitschlitzstruktur in jedem der Nutzdatenblöcke NDB1, NDB2 33 erste Datensymbole DSY1 und die als "stealing flag" ausgebildeten Signalisierungsdaten SD in einem zweiten Datensymbol DSY2 enthalten sind.

In einem Telekommunikationssystem mit einer CDMA-,FDMA- und TDMA-Vielfachzugriffskomponente, insbesondere ein bezüglich Vielfachzugriffsmethoden hybrides "JD-CDMA"-Telekommunikationssystem wird gemäß den Ausführungen zu den FIGUREN 2 und 3 werden die Symbole mit einem teilnehmerspezifischen Spreizcode mit einem Spreizfaktor Q gespreizt. In der Literatur ist ein Wert für den Spreizfaktor Q empfohlen, der mindestens das 1,5-fache der Teilnehmerzahl pro Zeitschlitz (Burst) beträgt. Ist die Anzahl der Teilnehmer pro Zeitschlitz gemäß den Ausführungen zu FIGUR 2 vorzugsweise K=8, so ergibt sich für

$$Q \geq 1,5*K = 1,5 * 8 = 12$$

$\rightarrow$ Gewählt wird für die Zeitschlitzstruktur in FIGUR 4:
Q =14

Dies bedeutet für die Datensymbole DSY1, DSY2, dass das erste Datensymbol DSY1 14 als "Chip" ausgebildete erste Datenelemente DE1 und das zweite Datensymbol DSY2 14 als "Chip" ausgebildete zweite Datenelemente DE2 aufweist.

Um die in FIGUR 4 dargestellte Zeitschlitzstruktur an die GSM-Taktfrequenz anzupassen, muss sich die Zeitdauer des Datenelementes DE1, DE2 bzw. die Chipdauer $T_c$ aus der GSM-Taktfrequenz $f_t$=13 MHz ableiten lassen. Für die Chipdauer $T_c$ gilt daher die Beziehung $T_c = U/f_t$ µs.

"U" wird nun so bestimmt, dass die Schutzzeitzonendauer $T_g$ und die Impulsantwortdauer pro Teilnehmer für die Kanalschätzung $T_{imp}$ in Bezug auf die GSM-Werte ($T_g$= ca. 30 µs und $T_{imp}$> 12 µs) eingehalten und nicht so viele Ressourcen verschwendet werden.

Es lassen sich nun unter Berücksichtigung der vorstehenden Ausführungen für U=5, U=6 und U=7 folgende Werte angeben:

U=5:
Länge der "Midamble" bzw. des Trainingsdatenblocks TDB:

$$T_m = T_b - T_g - S_b*Q*T_c = 186,23 \text{ µs} \approx 484 \text{ Chip} = L_m$$

$$L_m \geq K*W + W - 1$$

$\rightarrow$ W = 53 Chip (Impulsantwortlänge in Chip) bzw.
$\rightarrow$ $T_{imp}$ = 20,38 µs

Bei W = 53 ist $L_m$ = 476 Chip
Damit beträgt die Schutzzeitzonendauer:

$$T_g = T_b - (L_m + S_b * Q) * T_c = 33,15 \ \mu s$$

<u>U=6:</u>
Länge der "Midamble" bzw. des Trainingsdatenblocks TDB:

$$T_m = T_b - T_g - S_b * Q * T_c = 114,08 \ \mu s \approx 247 \ Chip = L_m$$

$$L_m \geq K * W + W - 1$$

$\rightarrow$ W = 27 Chip (Impulsantwortlänge in Chip) bzw.
$\rightarrow T_{imp}$ = 12,46 $\mu s$
Bei W = 27 ist $L_m$ = 242 Chip
$\rightarrow$ Gewählt wird für die Zeitschlitzstruktur in FIGUR 4: $L_m$ = 243 Chip
Damit beträgt die Schutzzeitzonendauer:

$$T_g = T_b - (L_m + S_b * Q) * T_c = 32,92 \ \mu s$$

<u>U=7:</u>
Länge der "Midamble" bzw. des Trainingsdatenblocks TDB:

$$T_m = T_b - T_g - S_b * Q * T_c = 41,92 \ \mu s \approx 77 \ Chip = L_m$$

$$L_m \geq K * W + W - 1$$

$\rightarrow$ W = 8 Chip (Impulsantwortlänge in Chip) bzw.
$\rightarrow T_{imp}$ = 4,61 $\mu s$
Bei W = 8 ist $L_m$ = 71 Chip
Damit beträgt die Schutzzeitzonendauer:

$$T_g = T_b - (L_m + S_b * Q) * T_c = 33,69 \ \mu s$$

Für die Zeitschlitzstruktur in FIGUR 4 werden U=6 und Q=14 gewählt.

Dadurch ergibt sich für die Chipdauer $T_c$ ein Wert von 6/13 $\mu s$. Die Zeitdauer des Datenelementes DE1, DE2 beträgt also 6/13 $\mu s$. Daraus folgt, dass das erste und zweite Datensymbol DSY1 eine Zeitdauer von 6,46 $\mu s$ besitzt und dass der erste und zweite Nutzdatenblock NDB1, NDB2 jeweils eine Zeitdauer von 213,23 $\mu s$ aufweist. Für die gewählte Länge des Trainingsdatenblocks TDB von $L_m$=243 Chips ergibt sich eine Zeitdauer des Trainingsdatenblocks von 112,15 $\mu s$. Wird für die Schutzzeitzone SZZ eine Zeitdauer von 32 $\mu s$ verwendet, bleibt in dem Zeitschlitz ZS1...ZS8 genügend Zeit, um die als "stealing flag" ausgebildeten zweiten Datenelemente DE2 derart zwischen dem Trainingsdatenblock TDB und dem zweiten Nutzdatenblock NDB anzuordnen, dass das Verhältnis von der Anzahl der vor dem Trainingsdatenblock TDB angeordneten Datenelemente DE1, DE2 zu der Anzahl der nach dem Trainingsdatenblock TDB angeordneten Datenelemente DE1, DE2 ungleich 1 ist.

**Patentansprüche**

1. Drahtloses Telekommunikationssystem mit einer CDMA-,FDMA- und TDMA-Vielfachzugriffskomponente, insbesondere ein bezüglich Vielfachzugriffsmethoden hybrides "JD-CDMA"-Telekommunikationssystem, bei dem

   (a) Frequenzen von für das drahtlose Telekommunikationssystem vorgegebenen Frequenzbändern sind jeweils in eine Vielzahl von Zeitschlitzen (ZS1...ZS8) mit jeweils einer vorgegebenen Zeitschlitzdauer (ZSD) unterteilt,
   (b) in den Frequenzbändern des drahtlosen Telekommunikationssystems sind jeweils Telekommunikationsverbindungen von einer vorgegebenen Anzahl von Telekommunikationsteilnehmern (TKT1...TKT8) gleichzeitig herstellbar,
   (c) die Zeitschlitze (ZS1...ZS8) weisen jeweils eine Zeitschlitzstruktur mit zwei Nutzdatenblöcken - einem ersten Nutzdatenblock (NDB1) und einen zweiten Nutzdatenblock (NDB2), einem zwischen den Nutzdatenblöcken (NDB1, NDB2) angeordneten, als "midambel" ausgebildeten Trainingsdatenblock (TDB) und einer nach Trainingsdatenblock (TDB) und einem der Nutzdatenblöcke (NDB1, NDB2) angeordneten Schutzzeitzone (SZZ) auf,
   (d) in den Nutzdatenblöcken (NDB1, NDB2) und dem Trainingsdatenblock (TDB) sind jeweils mehrere, als "chip" ausgebildete erste Datenelemente (DE1) enthalten,

   **dadurch gekennzeichnet, daß**
   zwischen mindestens einem der Nutzdatenblöcke (NDB1, NDB2) und dem Trainingsdatenblock (TDB) zweite als "chip" und zu Signalisierungszwecken als "stealing flag" ausgebildete Datenelemente (DE2) derart angeordnet sind, daß das Verhältnis von der Anzahl der vor dem Trainingsdatenblock (TDB) angeordneten ersten und zweiten Datenelemente (DE1, DE2) zu der Anzahl der nach dem Trainingsdatenblock (TDB) angeordneten ersten und zweiten Datenelemente (DE1, DE2) bei jeweils identischer Anzahl der ersten Datenelemente (DE1) in den beiden Nutzdatenblöcken (NDB1, NDB2) ungleich eins ist.

2. Drahtloses Telekommunikationssystem nach Anspruch 1, **dadurch gekennzeichnet, daß**
   die Frequenzen des Frequenzbandes jeweils in acht Zeitschlitze (ZS1...ZS8) mit jeweils einer vorgegebenen Zeitschlitzdauer (ZSD) von etwa 577 $\mu$s unterteilt sind.

3. Drahtloses Telekommunikationssystem nach Anspruch 1 oder 2, **dadurch gekennzeichnet, daß**
   in dem Frequenzband des drahtlosen Telekommunikationssystems Telekommunikationsverbindungen von im wesentlichen acht Telekommunikationsteilnehmern (TKT1...TKT8) gleichzeitig herstellbar sind.

4. Drahtloses Telekommunikationssystem nach einem der Ansprüche 1 bis 3, **dadurch gekennzeichnet, daß**
   die ersten Datenelemente (DE1) in mit einem telekommunikationsteilnehmerspezifischen Spreizcode mit einem Spreizfaktor von im wesentlichen 14 gespreizten ersten Datensymbolen (DSY1) enthalten sind.

5. Drahtloses Telekommunikationssystem nach einem der Ansprüche 1 bis 3, **dadurch gekennzeichnet, daß**
   die zweiten Datenelemente (DE2) in mit einem telekommunikationsteilnehmerspezifischen Spreizcode mit einem Spreizfaktor von im wesentlichen 14 gespreizten zweiten Datensymbolen (DSY2) enthalten sind.

6. Drahtloses Telekommunikationssystem nach Anspruch 4, **dadurch gekennzeichnet, daß**
   in den Nutzdatenblöcken (NDB1, NDB2) jeweils im wesentlichen 33 erste Datensymbole (DSY1) enthalten sind.

7. Drahtloses Telekommunikationssystem nach einem der Ansprüche 4 bis 6, **dadurch gekennzeichnet, daß**
   die Datensymbole (DSY1, DSY2) jeweils zwei Bruttobits enthalten.

8. Drahtloses Telekommunikationssystem nach einem der Ansprüche 2, 3, 4, 6 und 7, **dadurch gekennzeichnet, daß** die Nutzdatenübertragungsrate bei einer Verschachtelungstiefe (Interleavingtiefe) von "4" und einem Faltungscode mit einer Coderate von "0,5" und einer Rückgrifftiefe (Constraint-length) von "5" im wesentlichen 13 kBit/s beträgt.

9. Drahtloses Telekommunikationssystem nach einem der Ansprüche 1 bis 8, **dadurch gekennzeichnet, daß**
   in dem Trainingsdatenblock (TDB) im wesentlichen "243" erste Datenelemente (DE1) enthalten sind.

10. Drahtloses Telekommunikationssystem nach einem der Ansprüche 1 bis 8, **dadurch gekennzeichnet, daß**
    die Schutzzeitzone (SZZ) mindestens eine Zeitdauer von 30 $\mu$s aufweist.

**11.** Drahtloses Telekommunikationssystem nach Anspruch 1 oder 5, **dadurch gekennzeichnet, daß** die zweiten Datenelemente (DE2) vor dem Trainingsdatenblock (TDB) angeordnet sind.

**12.** Drahtloses Telekommunikationssystem nach Anspruch 1 oder 5, **dadurch gekennzeichnet, daß** die zweiten Datenelemente (DE2) nach dem Trainingsdatenblock (TDB) angeordnet sind.

**Claims**

**1.** Wireless telecommunication system with a CDMA, FDMA and TDMA multiple access component, especially a hybrid JD-CDMA telecommunication system as regards multiple access methods, in which

(a) Frequencies of frequency bands predetermined for the wireless telecommunication system are subdivided in each case into a plurality of time slots (ZS1...ZS8) each with a predetermined timeslot duration (ZSD),
(b) In the frequency bands of the wireless telecommunication systems, telecommunication connections are able to be established simultaneously by a predetermined number of telecommunication subscribers (TKT1...TKT8),
(c) The time slots (ZS1...ZS8) each have a time slot structure with two payload data blocks - a first payload data block (NDB1) and a second payload data block (NDB2), a training data block (TDB) arranged between the payload data blocks (NDB1, NDB2) embodied as a "midamble" and a guard time zone (SZZ) arranged after the training data block (TDB) and one of the user data blocks (NDB1, NDB2),
(d) A number of first data elements (DE1) arranged in each case as chips are contained in the payload data blocks (NDB1, NDB2) and the training data block (TDB),

**characterized in that**
between at least one of the user data blocks (NDB1, NDB2) and the training data block (TDB) second data elements (DE2) embodied as "chips" and for signalling purposes as "stealing flags" are arranged, such that the ratio of the number of first and second data elements (DE1, DE2) arranged before the training data block (TDB) to the number of first and second data elements (DE1, DE2) arranged after the training data block (TDB) with an identical number of first data elements (DE1) in each case, is not equal to one in the two payload data blocks (NDB1, NDB2).

**2.** Wireless telecommunication system in accordance with claim 1, **characterized in that** the frequencies of the frequency band are each divided up into eight time slots (ZS1...ZS8) each with a predetermined time slot duration (ZSD) of around 577 μs.

**3.** Wireless telecommunication system in accordance with claim 1 or 2, **characterized in that** in the frequency band of the wireless telecommunication system telecommunication connections of essentially eight telecommunication subscribers (TKT1...TKT8) can be established simultaneously.

**4.** Wireless telecommunication system in accordance with one of the claims 1 to 3, **characterized in that** the first data elements (DE1) are contained in a subscriber-specific spread code with a spread factor of essentially 14 spread first data symbols (DSY1).

**5.** Wireless telecommunication system in accordance with one of the claims 1 to 3, **characterized in that** the second data elements (DE2) are contained in a subscriber-specific spread code with a spread factor of essentially 14 spread second data symbols (DSY2).

**6.** Wireless telecommunication system in accordance with claim 4, **characterized in that** 33 first data symbols (DSY1) are essentially contained in the payload data blocks (NDB1, NDB2) in each case.

**7.** Wireless telecommunication system in accordance with one of the claims 4 to 6, **characterized in that** the data symbols (DSY1, DSY2) each contain two gross bits.

**8.** Wireless telecommunication system in accordance with one of claims 2, 3, 4, 6 and 7, **characterized in that** the user data transmission rate for an interleaving depth of "4" and a folding code with a code rate of "0.5" and a constraint-length of "5" is essentially 13 Kbit/s.

**9.** Wireless telecommunication system in accordance with one of claims 1 to 8, **characterized in that** essentially "243" first data elements (DE1) are contained in the training data block (TDB).

10. Wireless telecommunication system in accordance with one of claims 1 to 8, **characterized in that** the guard time zone (SZZ) has a duration of at least 30 µs.

11. Wireless telecommunication system in accordance with claim 1 or 5, **characterized in that**
the second data elements (DE2) are arranged before the training data block (TDB).

12. Wireless telecommunication system in accordance with claim 1 or 5, **characterized in that**
the second data elements (DE2) are arranged after the training data block (TDB).

## Revendications

1. Système de télécommunication sans fil avec une composante d'accès multiple CDMA, FDMA et TDMA, et plus particulièrement un système de télécommunication «JD-CDMA» hybride au regard de méthodes d'accès multiple, dans lequel

   (a) des fréquences de bandes de fréquences prédéterminées pour le système de télécommunication sans fil sont respectivement subdivisées en une pluralité de créneaux temporels (ZS1 ... ZS8) avec respectivement une durée de créneau temporel (ZSD) prédéterminée;
   (b) des liaisons de télécommunication peuvent être établies simultanément par un nombre prédéterminé d'abonnés des télécommunications (TKT1 ... TKT8) dans les bandes de fréquences du système de télécommunications sans fil;
   (c) les créneaux temporels (ZS1 ... ZS8) présentent respectivement une structure de créneau temporel avec deux blocs de données utiles - un premier bloc de données utiles (NDB1) et un deuxième bloc de données utiles (NDB2), un bloc de données d'apprentissage (TDB) qui se présente sous la forme d'un «midambule» et est situé entre les blocs de données utiles (NDB1, NDB2) et une zone de temps de garde (SZZ) située après le bloc de données d'apprentissage (TDB) et l'un des blocs de données utiles (NDB1, NDB2),
   (d) plusieurs premiers éléments de données (DE1) qui se présentent sous la forme de «chips» sont respectivement contenus dans les blocs de données utiles (NDB1, NDB2) et le bloc de données d'apprentissage (TDB),

   **caractérisé en ce que**
   des deuxièmes éléments de données (DE2) qui se présentent sous la forme de «chips» et de «stealing flag» à des fins de signalisation sont disposés de manière telle, entre au moins l'un des blocs de données utiles (NDB1, NDB2) et le bloc de données d'apprentissage (TDB), que le rapport entre le nombre des premiers et deuxièmes éléments de données (DE1, DE2) disposés avant le bloc de données d'apprentissage (TDB) et le nombre des premiers et deuxièmes éléments de données (DE1, DE2) disposés après le bloc de données d'apprentissage (TDB) est différent de 1, le nombre des premiers éléments de données (DE1) étant respectivement identique dans les deux blocs de données utiles (NDB1, NDB2).

2. Système de télécommunication sans fil selon la revendication 1, **caractérisé en ce que** les fréquences de la bande de fréquences sont respectivement subdivisées en huit créneaux temporels (ZS1 ... ZS8) avec respectivement une durée de créneau temporel (ZSD) prédéterminée d'environ 577 µs.

3. Système de télécommunication sans fil selon la revendication 1 ou 2, **caractérisé en ce que**, dans la bande de fréquences du système de télécommunication sans fil, des liaisons de télécommunication peuvent être établies simultanément par essentiellement huit abonnés des télécommunications (TKT1 ... TKT8).

4. Système de télécommunication sans fil selon l'une des revendications 1 à 3, **caractérisé en ce que** les premiers éléments de données (DE1) sont contenus dans des premiers symboles de données (DSY1) étalés avec un code d'étalement spécifique à un abonné des télécommunications avec un facteur d'étalement de essentiellement 14.

5. Système de télécommunication sans fil selon l'une des revendications 1 à 3, **caractérisé en ce que** les deuxièmes éléments de données (DE2) sont contenus dans des deuxièmes symboles de données (DSY2) étalés avec un code d'étalement spécifique à un abonné des télécommunications avec un facteur d'étalement de essentiellement 14.

6. Système de télécommunication sans fil selon la revendication 4, **caractérisé en ce que** essentiellement 33 premiers symboles de données (DSY1) sont respectivement contenus dans les blocs de données utiles (NDB1, NDB2).

**7.** Système de télécommunication sans fil selon l'une des revendications 4 à 6, **caractérisé en ce que** les symboles de données (DSY1, DSY2) contiennent respectivement deux bits bruts.

**8.** Système de télécommunication sans fil selon l'une des revendications 2, 3, 4, 6 et 7, **caractérisé en ce que** le débit de transmission de données utiles est de essentiellement 13 kbits/s pour une profondeur d'entrelacement (profondeur interleaving) de «4» et un code convolutif ayant un taux de code de «0,5» et une longueur de contrainte (Constraint length) de «5».

**9.** Système de télécommunication sans fil selon l'une des revendications 1 à 8, **caractérisé en ce que** essentiellement «243» premiers éléments de données (DE1) sont contenus dans le bloc de données d'apprentissage (TDB).

**10.** Système de télécommunication sans fil selon l'une des revendications 1 à 8, **caractérisé en ce que** la zone de temps de garde (SZZ) présente au moins une durée temporelle de 30 $\mu$s.

**11.** Système de télécommunication sans fil selon l'une des revendications 1 ou 5, **caractérisé en ce que** les deuxièmes éléments de données (DE2) sont situés avant le bloc de données d'apprentissage (TDB).

**12.** Système de télécommunication sans fil selon l'une des revendications 1 ou 5, **caractérisé en ce que** les deuxièmes éléments de données (DE2) sont situés après le bloc de données d'apprentissage (TDB).

# FIG 1

Zeitrahmendauer (4,615 ms)

TDMA-Rahmen

| Zeit-schlitz ZS1 | Zeit-schlitz ZS2 | Zeit-schlitz ZS3 | Zeit-schlitz ZS4 | Zeit-schlitz ZS5 | Zeit-schlitz ZS6 | Zeit-schlitz ZS7 | Zeit-schlitz ZS8 |
|---|---|---|---|---|---|---|---|

Zeitschlitzdauer (577 μs)

| Tail-bits | Datenbits | Stea-ling-Flag | Kontroll-bits | Stea-ling-Flag | Datenbits | Tail-bits | Schutz-zeitzone |
|---|---|---|---|---|---|---|---|
| Bits 3 | 57 | 1 | 26 | 1 | 57 | 3 | |

TDMA-Rahmen

# FIG 2

Zeitrahmendauer (6 ms)

| Teilnehmer-gruppe ... | Teilnehmer-gruppe ... | Teilnehmer-gruppe ... | ... | Teilnehmer-gruppe ... |

Zeitrahmen

| Teilnehmer-gruppe 13 | Teilnehmer-gruppe 14 | Teilnehmer-gruppe 15 | ... | Teilnehmer-gruppe 24 |
| Teilnehmer-gruppe 1 | Teilnehmer-gruppe 2 | Teilnehmer-gruppe 3 | | Teilnehmer-gruppe 12 |

FDMA-Komponente

Bandbreite B = 1,6 MHz

TDMA-Komponente

Zeitschlitz

CDMA-Komponente

Teilneh-mer 1
Teilneh-mer 2

| Nutzdaten-block | Tainingsdatenblock "midambel" | Nutzdaten-block | Schutz-zeitzone |

Teilneh-mer K (z.B. K=8)

| Nutzdaten-block | Tainingsdatenblock "midamble" | Nutzdaten-block | Schutz-zeitzone |

Zeitschlitzdauer (500μs)

# FIG 3

Zeitschlitzdauer (600 µs)

| 168 µs | 134 µs | 168 µs | 30 µs |

| 1 | 2 | ⋯ | ⋯ | 24 | | 1 | 2 | ⋯ | ⋯ | 24 | |

Q=14

| 1 | 2 | ⋯ | 14 |

0,5 µs

7 µs

| 1 | 2 | ⋯ | 268 |

0,5 µs

$$L_m = K \cdot W + W - 1$$
$$[L_m \approx (K + 1)W]$$

Daten-
element
"chip"

Zeitschlitz ZS1 ..... ZS8

Zeitschlitzdauer ZSD (577 μs)

112,15 μs (("K=8"+1)"W=27"=243 "chip")

213,23 μs (33 * 14=462 "chip")   213,23 μs (33 * 14=462 "chip")   32μs

Nutzdatenblock   NDB1

1  2   32  33

Trainingsdatenblock "midambel"   TDB

Nutzdatenblock   NDB2

1  2   32  33

Schutz-zeitzone   SZZ

Signalisierungs-daten "stealing flag"   SD

Q=14   Q=14

1  2   Datensymbol 13 14

6,46μs

DSY1, DSY2

DE1, DE2

Daten-element "chip"

6/13 μs

(U=6; 13 MHz GSM-Taktfrequenz)

## FIG 4